# EUROPEAN PATENT APPLICATION

(11) **EP 3 188 108 A1**
(43) Date of publication of application: **05.07.2017**
(21) Application number: 16205646.9
(22) Date of filing: 21.12.2016
(51) Int. Cl.: G06Q 30/02

(54) **ADVERTISING METHOD AND ADVERTISING SYSTEM USING WEB CONTENT**

(30) Priority: 04.01.2016 KR 20160000500
(71) Applicant: Lee, Jun Yeong, Seoul 08646 (KR)
(72) Inventor: Lee, Jun Yeong, Seoul 08646 (KR)
(74) Representative: Botti, Mario

(57) **Abstract**

An advertisement system and an advertisement method using web content are provided. The advertisement system includes a content providing server to store streaming content, and an advertisement providing server to store an advertisement word, and the content providing server includes a content processing unit to store the streaming content, and an advertisement processing unit to substitute a word in the streaming content with the advertisement word, which is received from the advertisement providing server, and to provide second streaming content having the substituted advertisement word to a first terminal.

## Description

### BACKGROUND

Embodiments of the inventive concept described herein relate to an advertising method and an advertising system using web content.

In general, as technologies on mobile terminals have developed, tasks have been performed on an existing personal computer (PC) can be performed even in the mobile terminals recently. Accordingly, mobile terminals, such as cellular phones, portable multimedia players (PMP), personal digital assistants (PDA), moving picture experts group audio layer III (MP3) players, or electronic devices, have been mainly used for the purpose of reproducing text content including electronic books (e-book), electronic newspapers, or electronic articles, or image content including cartoons, or pictures. The text content and the image content, which include characters and images, respectively, is arranged in a predetermined direction, for example, an up-down direction, or a left-right direction, following the development of storylines thereof.

According to general technologies of providing the text and image content of the related art, after scanning offline text and image content printed on paper, a predetermined region of scanned offline text and image is specified, manually edited and modified in match with the size of a screen of a mobile terminal, and provided to the mobile terminal.

Currently, most text and image content for a mobile terminal is serviced by professional mobile content providers. The professional mobile content providers have provided mobile text and image content in various connection schemes depending on wireless communication carriers.

In more detail, different from existing e-books, streaming digital content, such as a web fiction or a webtoon, is used without being downloaded in entire volume to a mobile terminal of a user. In other words, the streaming digital content is called for in the unit of a page from a server and displayed on the mobile terminal. Accordingly, as soon as the streaming digital content is modified on the server, a service user can be provided with the modified content.

Meanwhile, an advertisement serves as one of main sources of income for a provider that provides content for a mobile terminal. However, actually, a space of the mobile terminal, into which the advertisement is to be inserted, is limited and thus the line of sight of a content user is blocked. Accordingly, the resistance of the content user against the advertisement must be minimized and the eyes of the content user must be attracted within the confined space.

Therefore, there are required content converting and advertisement inserting techniques capable of automatically converting and providing text and image content in match with reproduction environments optimized for mobile terminals while ensuring advertisement profits to be earned for content providers.

Meanwhile, as a related art, Korean Unexamined Patent Publication No. 10-2010-0030464 entitled "Apparatus and Method for Providing Text-based Content" filed on Sep. 10, 2008.

### SUMMARY

Embodiments of the inventive concept provide profits for a creator of streaming content or a more effectively advertising function for an advertiser, by substituting a specific word in the streaming content, which is provided through a terminal, with an advertisement word and providing streaming content having the substituted advertisement word.

Embodiments of the inventive concept allow a more effective advertisement by substituting an entire sentence in streaming content rather than a word in the stream content with an advertisement sentence.

Embodiments of the inventive concept allow a creator to set whether to substitute a word or a sentence in streaming content with an advertisement word, and to set an advertisement substitution level to release an advertisement to a proper extent without excessive damage to a streaming content value of the creator.

Embodiments of the inventive concept provide a more direct advertisement function by providing advertisement information, which is linked with an advertisement word, to a user when the user of streaming content clicks the advertisement word displayed on a web of a mobile terminal.

Embodiments of the inventive concept allow a creator to objectively determine data related to a profit earned from a work of the creator by personally checking information on an advertising profit through a terminal.

According to an aspect of an embodiment, an advertising system using web content includes a content providing server to store streaming content, and an advertisement providing server to store an advertisement word, and the content providing server includes a content processing unit to store the streaming content, an advertisement processing unit to substitute a word in the streaming content with the advertisement word, which is received from the advertisement providing server, and to provide second streaming content having the substituted advertisement word to a first terminal, and an advertisement setting unit to receive a control signal from a second terminal to set whether the word in the streaming content is substituted with the advertisement word or to set a substitution level, and to perform the setting in response to the control signal.

According to another aspect of an embodiment, an advertising method using web content includes storing streaming content by content providing server, receiving a control signal from a second terminal to set whether a word in the streaming content is substituted with an advertisement word or to set a substitution level, and performing the setting in response to the received control signal, by the content providing server, substituting the word in the streaming content with the advertisement word, which is received from an advertisement providing server, by the content providing server, and providing second streaming content having the substituted advertisement word to a first terminal, by the content providing server.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a drawing illustrating the configuration of an advertising system using web content, according to an embodiment;
FIG. 2 is a block diagram illustrating the configuration of a content providing server in an advertising system using web content, according to an embodiment;
FIG. 3 is a flowchart to explain an advertising method using web content, according to an embodiment; and
FIGS. 4 to 6 are drawings to explain an advertising method using web content, according to an embodiment.

### DETAILED DESCRIPTION

Embodiments will be described in detail with reference to the accompanying drawings. In the following description of embodiments, the detailed descriptions of well-known functions or configurations incorporated herein are omitted when they make the subject matter rather unclear. In addition, the sizes of elements in the drawings may be exaggerated for the purpose of explanation and clarity, and may not utterly reflect the actual size.

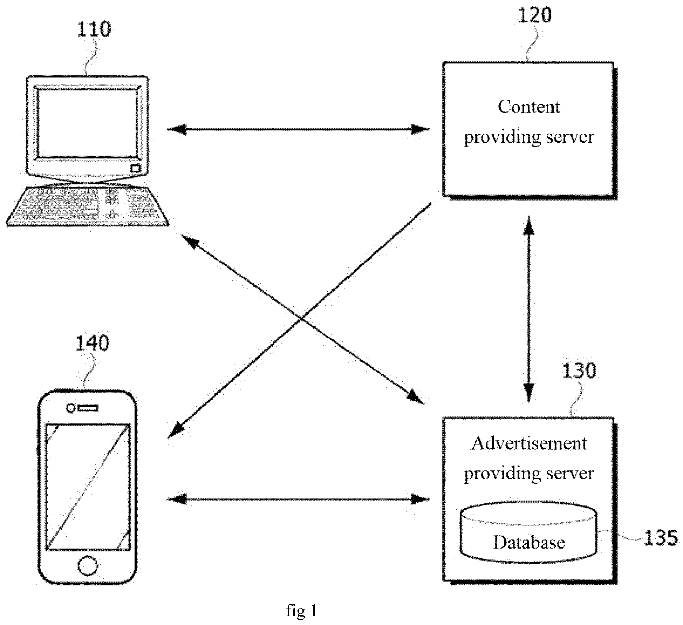

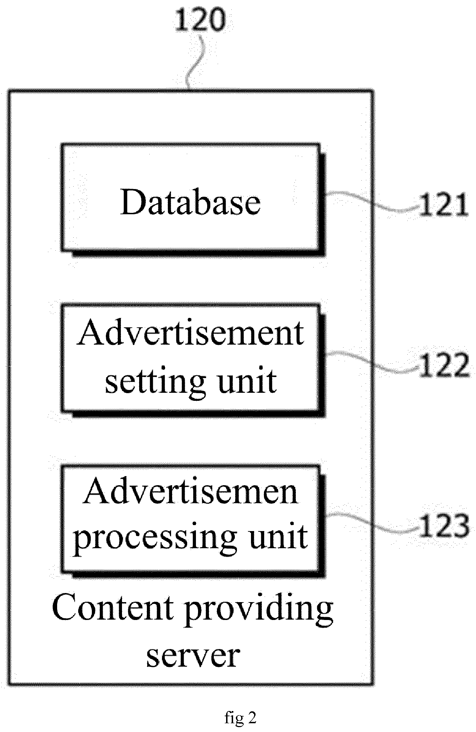

FIG. 1 is a drawing illustrating the configuration of an advertising system using web content, according to an embodiment, and FIG. 2 is a block diagram illustrating the configuration of a content providing server, according to an embodiment.

Hereinafter, the configurations of the advertising system using the web content and the content providing server according to an embodiment will be described with reference to FIGS. 1 and 2.

As shown in FIG. 1, according to an embodiment, the advertising system using the web content includes a content providing server 120 and an advertisement providing server 130.

The content providing server 120 stores streaming content. In this case, according to an embodiment, the streaming content may refer to that a mobile appliance or a computer terminal receives and uses content in the units of a predetermined-sized data or a page from the content providing server in real time, different from the conventional case that the mobile appliance or the computer terminal uses the content after downloading an entire amount of the content.

For example, a web fiction or a webtoon provided in the form of streaming content may be received and used by required episodes or in a required range in real time, different from a conventional electronic book (e-book) downloaded to the mobile appliance or the computer terminal and read by a user.

To provide the streaming content as described above, a creator creates the streaming content through a terminal 110, and transmits the created streaming content to the content providing server 120.

Accordingly, as shown in FIG. 2, a content processing unit 121 of the content providing server 120 may receive and store the streaming content created through the terminal 110 by the creator.

Meanwhile, the terminal 110 may include various terminals, such as a computer terminal, a smart terminal, and a personal digital assistant (PDA) terminal, using the streaming content.

An advertisement providing server 130 stores an advertisement word. In more detail, the advertisement providing server 130 may include a database 135 to store advertisement words in the database 135.

In addition, as shown in FIG. 2, the content providing server 120 further includes an advertisement processing unit 123. The advertisement processing unit 123 may substitute a word in the streaming content with an advertisement word received therein from the advertisement providing server 130.

In more detail, the advertisement processing unit 123 may substitute a specific word in the streaming content provided through the terminal 110 with the advertisement word and may provide streaming content having the substituted advertisement word. Accordingly, the creator of the streaming content may be provided with profits, and an advertiser may more effectively release an advertisement.

For example, the advertisement processing unit 123 may substitute 'brewed coffee' in the streaming content with 'T.O.P coffee' and may transmit streaming content having 'T.O.P coffee' to the terminal 140, thereby providing an advertisement through the streaming content.

In addition, according to another embodiment, the advertisement processing unit 123 may substitute the entire portion of a sentence in streaming content rather than a word in the streaming content with an advertisement sentence received therein from the advertisement providing server 130 and may provide streaming content having the advertisement sentence to the terminal 140.

As described above, the advertisement processing unit 123 may provide a more effective advertisement function by substituting the sentence in the streaming content into the advertisement sentence.

Meanwhile, a creator may set whether to substitute a word or a sentence in streaming content with an advertisement word, or may set an advertisement substitution level to release an advertisement to a proper extent without excessive damage to a streaming content value of the creator.

In other words, the creator may transmit a control signal for the above setting through the terminal 110, and an advertisement setting unit 122 of the content providing server 120 may receive the control signal to set whether to substitute the word in the streaming content with the advertisement word, or to set the advertisement substitution level, and may perform the setting in response to the received control signal.

In addition, according to an embodiment, the advertisement providing server 130 may directly provide an advertisement related to the advertisement word through a web of the terminal 140 when receiving a signal indicating that the advertisement word is selected from the streaming content.

In more detail, when the streaming content is provided through the web of the terminal 140, and when the advertisement word is selected from the streaming content provided through the web displayed on the terminal 140, the advertisement related to the advertisement word may be transmitted to the terminal 140 under the control of the advertisement providing server 130.

For example, when a user of the streaming content clicks the advertisement word displayed on the web of the terminal 140, advertisement information linked with the advertisement word may be displayed through a pop-up display window, or may be displayed on an additional web. Alternately, an advertisement web may be directly displayed.

Meanwhile, the creator may request information on an advertisement profit from the content providing server 120 or the advertisement providing server 130 through the terminal 110, and the advertisement providing server 130 may transmit the information on the earned advertisement profit to the terminal 110.

In more detail, the advertisement providing server 130 may transmit, to the terminal 110, information on the advertisement profit earned as the advertisement word is selected from the streaming content, as well as the information on the advertisement profit earned as the word in the streaming content is substituted with the advertisement word.

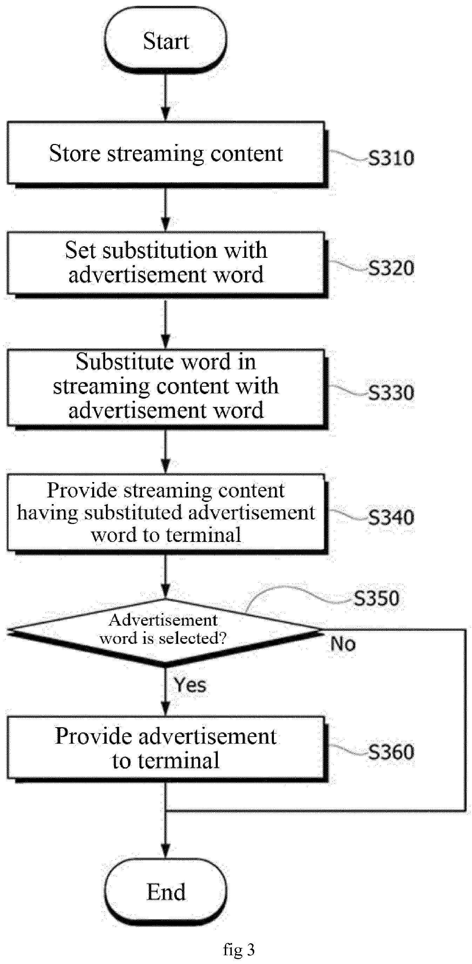

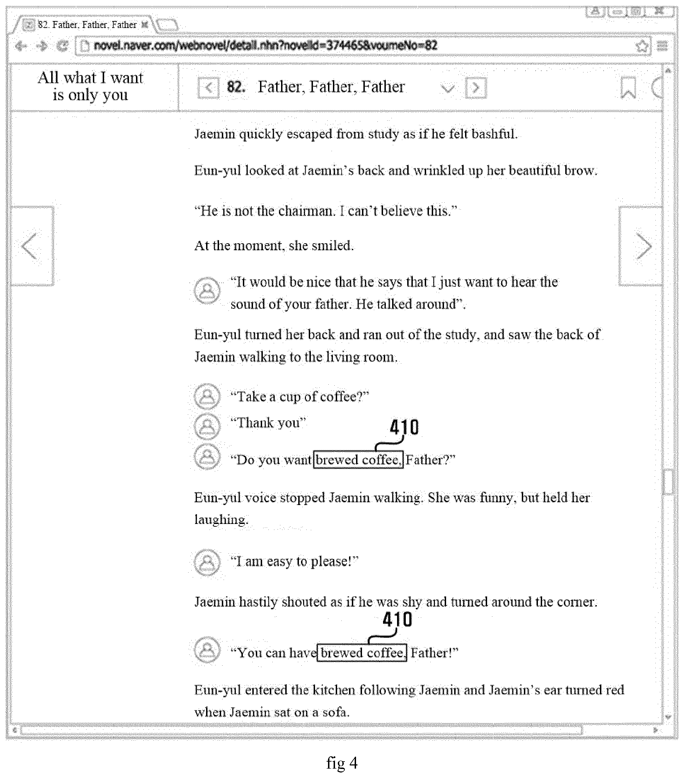

FIG. 3 is a flowchart to explain an advertising method using web content, according to an embodiment, and FIGS. 4 to 6 are drawings to explain the advertising method using the web content, according to an embodiment.

Hereinafter, the advertising method using the web content according to an embodiment will be described with reference to FIGS. 3 to 6.

A creator creates streaming content through a terminal, and transmits the created streaming content to a content providing server. Accordingly, the content providing server may receive the streaming content created by the creator through the terminal and may store the streaming content therein (step S310).

Thereafter, the creator transmits a control signal to set whether to substitute a word in the streaming content with an advertisement word, or to set an advertisement substitution level through a terminal. The content providing server may receive the control signal to set whether to substitute the word in the streaming content with the advertisement word, or to set the advertisement substitution level from the terminal, and may perform the setting in response to the received control signal (step S320).

Thereafter, the content providing server may substitute the word in the streaming content with the advertisement word received from the advertisement providing server based on the setting (step S330).

To this end, the advertisement providing server may store the advertisement word. In more detail, the advertisement providing server may be configured to store the advertisement word in a database by including the database, and the content providing server may receive the advertisement word from the advertisement providing server and may substitute the word in the streaming content with the advertisement word.

Therefore, the content providing server may substitute a specific word in the streaming content, which is provided through the terminal, with the advertisement word and may provide streaming content having the advertisement word to a terminal (step S340). Accordingly, the creator of the streaming content may be provided with profits, and an advertiser may more effectively release an advertisement.

For example, as shown in FIG. 4, the content providing server provides the streaming content. In this case, to provide streaming content to which an advertisement is applied, the creator may set whether to substitute a word in the streaming content with an advertisement word or may set a substitution level.

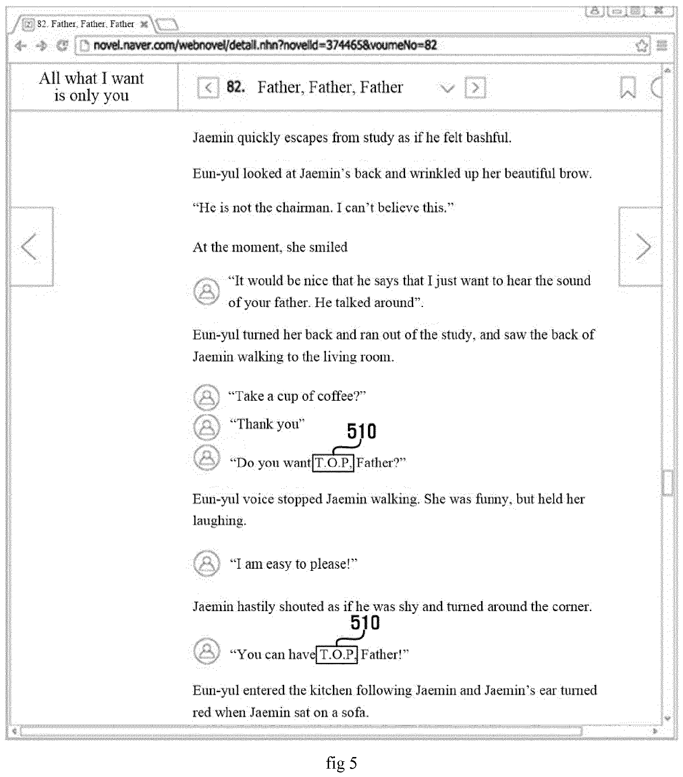

Based on the above setting by the creator, the content providing server may substitute 'brewed coffee' 410 in the streaming content with 'T.O.P' 510 and may transmit streaming content having 'T.O.P' 510 to the terminal, thereby providing an advertisement based on the streaming content as shown in FIGS. 4 and 5.

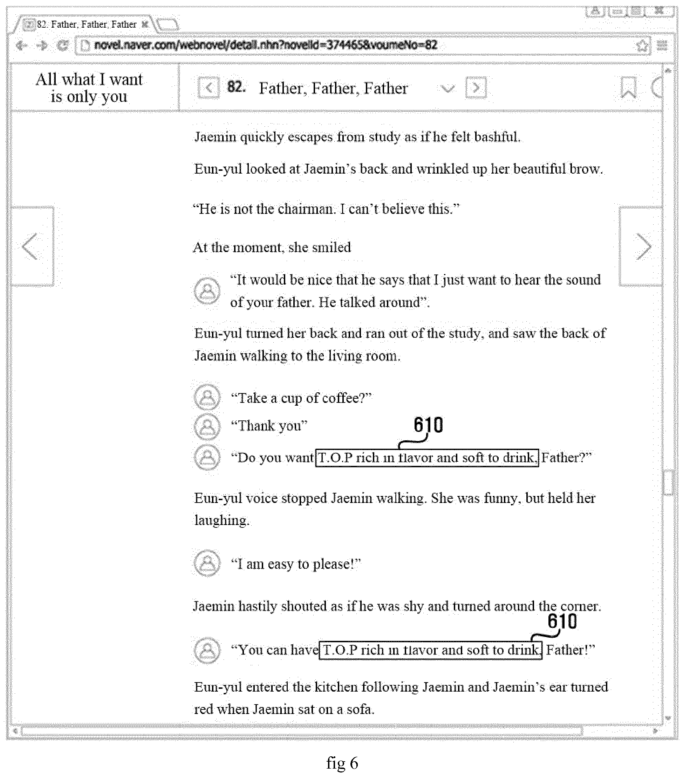

In addition, as shown in FIGS. 4 and 6, the content providing server may substitute 'brewed coffee' 410 in the streaming content with the sentence of 'T.O.P coffee rich in flavor and soft to drink' 610 and may transmit streaming content having 'T.O.P coffee rich in flavor and soft to drink' 610 to the terminal, thereby providing more various advertisement through the streaming content.

Therefore, the creator of the streaming content may be provided with a profit, and the advertiser may more effectively release an advertisement.

In this case, according to an embodiment, the content providing server may substitute a sentence in the streaming content with an advertisement sentence received through the advertisement providing server and may provide streaming content having the advertisement sentence to the terminal, thereby maximizing an advertisement effect. In other words, the sentence in the streaming content is substituted with the advertisement sentence, thereby more effectively providing the advertisement function.

In addition, according to an embodiment, the advertisement providing server may directly provide an advertisement related to the advertisement word through a web of the terminal when receiving a signal indicating that the advertisement word is directly selected from the streaming content.

In more detail, when the streaming content is provided through the web of the terminal, and when the advertisement word is selected from the streaming content provided through the web displayed on the terminal (step S350), the advertisement related to the advertisement word may be transmitted to the terminal under the control of the advertisement providing server (step S360).

In other words, when a user of the streaming content clicks the advertisement word displayed on the web of the terminal 140, advertisement information linked with the advertisement word may be displayed.

According to an embodiment, the specific word in the streaming content, which is provided through a terminal, may be substituted with an advertisement word, and streaming content having the substituted advertisement word is provided, thereby providing profits for the creator of streaming content or the more effectively advertising function for an advertiser.

According to an embodiment, the entire sentence rather than the word in the stream content may be substituted with an advertisement sentence, thereby allowing a more effective advertisement.

According to an embodiment, the creator may set whether to substitute a word or a sentence in streaming content with an advertisement word, and may set an advertisement substitution level to release an advertisement to a proper extent without excessive damage to the streaming content value of the creator.

According to an embodiment, when the user of the streaming content clicks the advertisement word displayed on a web of the mobile terminal, the advertisement information, which is linked with the advertisement word, is provided for the user, thereby providing the more direct advertisement function.

According to an embodiment, the creator may personally check the information on the advertising profit through the terminal to objectively determine data related to the profit earned from the work of the creator.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. An advertising system using web content, the advertising system comprising:
a content providing server configured to store streaming content; and
an advertisement providing server configured to store an advertisement word,
wherein the content providing server comprises:
a content processing unit configured to store the streaming content;
an advertisement processing unit configured to substitute a word in the streaming content with the advertisement word, which is received from the advertisement providing server, and to provide second streaming content comprising the substituted advertisement word to a first terminal; and
an advertisement setting unit configured to receive a control signal from a second terminal to set whether the word in the streaming content is substituted with the advertisement word or to set a substitution level, and configured to perform the setting in response to the received control signal.

2. The advertising system of claim 1, wherein the advertisement processing unit of the content providing server is configured to substitute a sentence in the streaming content with an advertisement sentence, which is received from the advertisement providing server, and to provide third streaming content comprising the substituted advertisement sentence to the first terminal.

3. The advertising system of claim 1, wherein the advertisement providing server provides an advertisement related to the advertisement word through a web of the first terminal when receiving a signal indicating that the advertisement word is selected from the second streaming content provided through the web of the first terminal.

4. The advertising system of claim 3, wherein the advertisement providing server transmits information on an advertisement profit, which is earned as the word in the streaming content is substituted with the advertisement word, or information on an advertisement profit, which is earned as the advertisement word is selected from the streaming content, to the second terminal.

5. An advertising method using web content, the advertising method comprising:
storing streaming content by a content providing server;
receiving, by the content providing server, a control signal from a second terminal to set whether a word in the streaming content is substituted with an advertisement word or to set a substitution level, and performing, by the content providing server, the setting in response to the received control signal;
substituting, by the content providing server, the word in the streaming content with an advertisement word which is received from an advertisement providing server; and
providing, by the content providing server, second streaming content comprising the substituted advertisement word to a first terminal.

6. The advertising method of claim 5, wherein the substituting of the word in the streaming content with the advertisement word comprises:
substituting, by the content providing server, a sentence in the streaming content with an advertisement sentence which is received from the advertisement providing server and
wherein the providing of the streaming content comprises:
providing, by the content providing server, third streaming content comprising the substituted advertisement sentence to the first terminal.

7. The advertising method of claim 5, further comprising:
providing, by the advertisement providing server, an advertisement related to the advertisement word through a web of the first terminal when the advertisement word is selected from the second streaming content provided through the web of the first terminal.

8. The advertising method of claim 7, further comprising:
transmitting, by the advertisement providing server, information on an advertisement profit, which is earned as the word in the streaming content is substituted with the advertisement word, or information on an advertisement profit, which is earned as the advertisement word is selected from the streaming content, to the second terminal.
